# EUROPÄISCHE PATENTSCHRIFT

(11) **EP 3 896 246 B1**
(45) Veröffentlichungstag und Bekanntmachung des Hinweises auf die Patenterteilung: **05.07.2023**
(21) Anmeldenummer: 21164976.9
(22) Anmeldetag: 25.03.2021
(51) Int. Cl.: E06B 7/10, E04D 13/03

(54) **GEBÄUDEVERSCHLUSSELEMENT MIT EINEM IONENWINDGENERATOR SOWIE VERFAHREN ZUM BETREIBEN EINES SOLCHEN GEBÄUDEVERSCHLUSSELEMENTS**
BUILDING CLOSURE ELEMENT WITH AN ION WIND GENERATOR AND METHOD FOR OPERATING THE SAME
ÉLÉMENT DE FERMETURE DE BÂTIMENT AVEC UN GÉNÉRATEUR DE VENT IONIQUE, AINSI QUE PROCÉDÉ DE FONCTIONNEMENT D'UN TEL ÉLÉMENT DE FERMETURE DE BÂTIMENT

(30) Priorität: 03.04.2020 DE 102020204389
(43) Veröffentlichungstag der Anmeldung: 20.10.2021
(73) Patentinhaber: Roto Frank Dachsystem-Technologie GmbH, 97980 Bad Mergentheim (DE)
(72) Erfinder: Dres, Martin, 97996 Niederstetten (DE)
(74) Vertreter: Dietz, Christopher Friedrich

(56) Entgegenhaltungen:
- EP-B1- 2 813 632
- JP-A- 2018 091 497
- US-A1- 2015 300 677

## Beschreibung

Die Erfindung betrifft ein Gebäudeverschlusselement, ausgestaltet als Dachflächenfenster, das einen Blendrahmen und einen eine Verglasung des Dachflächenfensters tragenden Flügelrahmen aufweist, und mit einer ersten Fluidöffnung und einer zweiten Fluidöffnung, die über einen Strömungsweg strömungstechnisch zumindest zeitweise miteinander verbunden sind, wobei der Blendrahmen und/oder der Flügelrahmen auf einer Außenseite des Dachflächenfensters zumindest bereichsweise von einem Abdeckblech übergriffen sind und der Strömungsweg zumindest bereichsweise von dem Abdeckblech begrenzt ist, und wobei in einem der Rahmen ein Lüftungskanal ausgebildet ist, der eine Wand des Rahmens unter Ausbildung der ersten Fluidöffnung durchgreift, die zweite Fluidöffnung von dem Abdeckblech begrenzt ist und der Lüftungskanal über einen von dem Abdeckblechbegrenzten Luftraum mit der zweiten Fluidöffnung strömungstechnisch verbunden ist. Die Erfindung betrifft weiterhin ein Verfahren zu seinem Betreiben.

Aus dem Stand der Technik ist beispielsweise die Druckschrift EP 0 679 774 A1 bekannt. Diese beschreibt ein Klapp-Schwing-Dachfenster, bei dem der Fensterflügel drehbar von zwei am oberen Ende des Futterkastens schwenkbar angeordneten Armen getragen ist. Der Fensterflügel wird in der Schwingstellung zusätzlich durch Achszapfen gehalten, die in Nuten an den Seitenholmen des Futterkastens verschiebbar geführt sind. In der Klappstellung ist der Fensterflügel mit den Armen fest verbunden. Zur Erhöhung des Komforts und zur Verbesserung der Bedienbarkeit ist vorgesehen, dass die Nuten an ihren oberen Enden keine Begrenzung aufweisen und dass die Achszapfen durch Betätigung eines Handgriffs entlang der Seitenholme derart längsverschiebbar sind, dass sie sich in der Schwingstellung in und in der Klappstellung außerhalb der Nuten befinden. Dabei werden durch den Handgriff gleichzeitig Kupplungselemente betätigt, die in der Klappstellung den Fensterflügel mit den Armen fest verbinden und diese Verbindung in der Schwingstellung aufheben.

Weiterhin offenbart die Druckschrift EP 2 813 632 A1 ein Dachfenster, insbesondere Dachflächenfenster, mit einem Flügelrahmen und mit einem Blendrahmen, sowie mit mindestens einem der Außenseite des Dachfensters zugeordneten, ein- oder mehrteiligen Abdeckelement, das als Abdeckblech ausgebildet ist und aus einem oberen, horizontalen Abdeckprofil sowie zwei vertikalen Abdeckschenkeln besteht, wobei das Abdeckelement zumindest einen Bereich des Flügelrahmens und/oder Blendrahmens unter Freilassung eines Hohlraums abdeckt, der sich unterhalb des Abdeckprofils und unter den Abdeckschenkeln erstreckt, und mit einer Lüftungseinrichtung, die mindestens einen Luftweg aufweist, der von einer Innenseite des Dachfensters zu der Außenseite des Dachfensters führt und mindestens einen Luftwegabschnitt aufweist, der den Hohlraum einbezieht. Dabei ist vorgesehen, dass für eine in dem Hohlraum erfolgende Kanalisierung des Luftwegs mindestens eine Abschottung vorgesehen ist, die zur Abtrennung mindestens eines Bereichs des Hohlraums in diesem angeordnet ist, sodass der Luftwegabschnitt keine lufttechnische Verbindung zum abgetrennten Bereich des Hohlraums aufweist.

Zudem ist aus der Druckschrift US 2015/0300677 A1 eine Luftreinigungsvorrichtung bekannt. Die Vorrichtung ist in einem Fenster angeordnet, das einen Innenraum und einen Außenraum trennt. Die Vorrichtung umfasst: eine Einlasskammer mit einem ersten Einlass, einem zweiten Einlass und einem Auslass, wobei der erste Einlass im Betrieb zum Außenraum hin offen ist und der zweite Einlass im Betrieb zum Innenraum hin offen ist; eine Luftpumpeneinheit zum Pumpen von Luft aus der Einlasskammer in den Innenraum durch den Auslass, wobei die Luft durch den ersten Einlass oder durch den zweiten Einlass in die Einlasskammer gepumpt wird; und eine stromaufwärts der Luftpumpeneinheit angeordnete Filtereinheit zum Filtern von Schadstoffen in der Luft.

Als weitere Druckschrift zum Stand der Technik sei die JP 2018-91497 A benannt.

Es ist Aufgabe der Erfindung, ein Gebäudeverschlusselement vorzuschlagen, welches gegenüber bekannten Gebäudeverschlusselementen Vorteile aufweist, insbesondere eine effiziente Belüftung eines Innenraums ermöglicht, der mittels des Gebäudeverschlusselements von einer Außenumgebung separiert ist.

Dies wird erfindungsgemäß mit einem Gebäudeverschlusselement mit den Merkmalen des Anspruchs 1 erreicht. Dabei ist vorgesehen, dass in dem Strömungsweg ein Ionenwindgenerator zum Erzeugen eines Luftstroms entlang des Strömungswegs angeordnet ist.

Das Gebäudeverschlusselement ist beispielsweise Bestandteil eines Gebäudes, insbesondere eines Wohngebäudes, kann jedoch auch separat von diesem vorliegen. Das Gebäudeverschlusselement separiert zumindest zeitweise eine Außenumgebung des Gebäudes von einem Innenraum des Gebäudes. Allgemeiner ausgedrückt liegt das Gebäudeverschlusselement strömungstechnisch zwischen der Außenumgebung und dem Innenraum vor. Das Gebäudeverschlusselement liegt in Form eines Dachflächenfensters vor.

Das Gebäudeverschlusselement dient zum einen dem Abgrenzen des Innenraums von der Au-βenumgebung, sodass der Innenraum zumindest vor Wettereinflüssen aus der Außenumgebung geschützt ist. Zum anderen dient es einem Lüften des Innenraums, also einem Belüften und/oder einem Entlüften des Innenraums. Unter dem Lüften ist grundsätzlich ein Lufttransport aus der Außenumgebung in Richtung des Innenraums beziehungsweise in diesen hinein und/oder umgekehrt zu verstehen. Mithilfe des Gebäudeverschlusselements wird also zumindest zeitweise Luft aus der Außenumgebung in Richtung des Innenraums beziehungsweise in diesen hinein gefördert. Zusätzlich oder alternativ kann es vorgesehen sein, mittels des Gebäudeverschlusselements zumindest zeitweise Luft aus dem Innenraum in Richtung der Außenumgebung beziehungsweise in diese hinein zu fördern.

Beispielsweise ist in einem Dach des Gebäudes eine Öffnung ausgestaltet, in welcher das Gebäudeverschlusselement angeordnet ist. Die Öffnung durchgreift das Dach ausgehend von dem Innenraum bis hin zu der Außenumgebung vollständig. Sie ist mithilfe des Gebäudeverschlusselements verschlossen, sodass der Strömungsweg ausschließlich über das Gebäudeverschlusselement vorliegt und nicht etwa durch die Öffnung an dem Gebäudeverschlusselement vorbei. Bevorzugt füllt das Gebäudeverschlusselement die Öffnung vollständig aus, liegt also ringsum durchgehend an einem die Öffnung begrenzenden Rand des Dachs an oder ist zumindest fluiddicht mit ihr beziehungsweise ihm verbunden.

Zum Fördern der Luft verfügt das Gebäudeverschlusselement über eine entsprechende Luftfördereinrichtung. Die Luftfördereinrichtung könnte als Ventilator ausgestaltet sein. Ein solcher weist jedoch wartungsintensive bewegliche Teile auf und erzeugt zudem während seines Betriebs zum Fördern der Luft ein Betriebsgeräusch. Beides ist grundsätzlich unerwünscht. Aus diesem Grund ist die Luftfördereinrichtung im Falle des erfindungsgemäßen Gebäudeverschlusselements als Ionenwindgenerator ausgestaltet. Das Fördern der Luft erfolgt bevorzugt allein beziehungsweise ausschließlich mittels des Ionenwindgenerators. Das bedeutet insbesondere, dass das Gebäudeverschlusselement ventilatorfrei ausgestaltet ist, also zum Fördern der Luft keine beweglichen Teile aufweist.

Der Ionenwindgenerator liegt in dem Strömungsweg vor, welcher die erste Fluidöffnung des Gebäudeverschlusselements und die zweite Fluidöffnung des Gebäudeverschlusselements strömungstechnisch miteinander verbindet. Mithilfe des Ionenwindgenerators wird zumindest zeitweise der Luftstrom entlang des Strömungswegs zum Lüften des Innenraums erzeugt. Die erste Fluidöffnung ist vorzugsweise randgeschlossen in dem Gebäudeverschlusselement ausgebildet, das Gebäudeverschlusselement umgreift die erste Fluidöffnung insoweit vollständig. Es kann jedoch auch vorgesehen sein, dass die erste Fluidöffnung lediglich bereichsweise von dem Gebäudeverschlusselement begrenzt ist. Beispielsweise ist es bei einer derartigen Ausgestaltung vorgesehen, dass die erste Fluidöffnung im Querschnitt gesehen bereichsweise von dem Gebäudeverschlusselement und bereichsweise von einer Wand des Gebäudes begrenzt ist, an welchem das Gebäudeverschlusselement angeordnet ist beziehungsweise welches das Gebäudeverschlusselement durchgreift. Zusätzlich oder alternativ gilt für die zweite Fluidöffnung das Gleiche.

Unter dem Ionenwindgenerator ist eine Luftfördereinrichtung zu verstehen, mittels welcher der Luftstrom entlang des Strömungswegs erzeugbar ist beziehungsweise zumindest zeitweise erzeugt wird. Der Ionenwindgenerator weist grundsätzlich zwei Elektroden auf, welche beabstandet zueinander angeordnet sind und mittels welchen ein elektrisches Feld erzeugt wird. Hierzu wird an einer ersten der Elektroden ein erstes elektrisches Potential und an einer zweiten der Elektroden ein von dem ersten elektrischen Potential verschiedenes zweites elektrisches Potential angelegt. Beispielsweise wird also die erste Elektrode mit einem Pluspol und die zweite Elektrode mit einem Minuspol einer elektrischen Stromquelle verbunden.

Eine derartige Ausgestaltung der Luftfördereinrichtung hat den Vorteil, dass zum einen keine beweglichen Teile vorliegen und zum anderen ein Betriebsgeräusch wesentlich geringer ist als bei einem Ventilator. Zusätzlich zu dem Erzeugen des Luftstroms nimmt der Ionenwindgenerator eine Reinigung der Luft vor, da die von ihm erzeugten Ionen effektiv Schmutzpartikel binden. Insbesondere sorgen die Ionen für eine Clusterbildung der Schmutzpartikel, also einer Aggregation der Schmutzpartikel, woraufhin die aggregierten Schmutzpartikel aufgrund ihres höheren Gewichts rascher absinken. Zusätzlich oder alternativ erzeugt der Ionenwindgenerator während seines Betriebs Ozon. Dieses reinigt und/oder desinfiziert die Luft, wobei Bakterien und/oder Viren abgetötet oder zumindest inaktiviert werden.

Die Erfindung sieht eine Ausgestaltung als Dachflächenfenster vor, das einen Blendrahmen und einen eine Verglasung des Dachflächenfensters tragenden Flügelrahmen aufweist. Das Dachflächenfenster liegt beispielsweise in Form eines Wohndachfensters beziehungsweise Wohndachflächenfensters vor. Es verfügt als wesentliche Bestandteile über den Blendrahmen und den Flügelrahmen. Der Flügelrahmen trägt die Verglasung, welche beispielsweise als Einfachverglasung oder als Mehrfachverglasung, insbesondere Doppelverglasung oder Dreifachverglasung, vorliegt. Die Verglasung ist zum Beispiel von Holmen des Flügelrahmens eingefasst, wobei insbesondere zwei Vertikalholme und zwei Horizontalholme vorgesehen sind. Der Blendrahmen verfügt bevorzugt ebenfalls über zwei Vertikalholme und zwei Horizontalholme. Sowohl für den Flügelrahmen als auch für den Blendrahmen sind jeweils zwei der Holme miteinander verbunden, insbesondere ist jeder der Vertikalholme mit jedem der Horizontalholme verbunden.

Das Dachflächenfenster ist zur Anordnung an oder in einem Dach des Gebäudes, insbesondere eines Wohngebäudes, vorgesehen und ausgebildet. Das Dach liegt zwischen der Außenumgebung und dem Innenraum des Gebäudes vor, separiert diese also voneinander. Das Dach setzt sich im Wesentlichen aus einer Dachkonstruktion und einer Dachhaut zusammen. Die Dachkonstruktion weist beispielsweise einen oder mehrere Sparren sowie eine oder mehrere Dachlatten auf. Die Dachlatten können hierbei in Konterlatten und Traglatten unterteilt werden, wobei das Vorliegen der Konterlatten rein optional ist. Die Traglatten sind üblicherweise senkrecht zu den Dachsparren angeordnet und an diesen befestigt. Die Konterlatten verlaufen hingegen parallel zu den Sparren.

Die Dachhaut ist außenseitig auf der Dachkonstruktion angeordnet beziehungsweise befestigt, begrenzt die Dachkonstruktion also in Richtung der Außenumgebung. Unter der Dachhaut ist insbesondere eine Dachdeckung oder eine Dachabdichtung zu verstehen. Die Dachdeckung weist beispielsweise eine Vielzahl von Ziegeln, Dachsteinen, Dachschindeln oder dergleichen auf. Nach innen, also in Richtung des Innenraums, wird die Dachkonstruktion bevorzugt von einer Innenwand begrenzt. Die Innenwand ist hierzu an der Dachkonstruktion auf ihrer dem Innenraum zugewandten Seite angeordnet und/oder befestigt.

Bei einer Montage des Dachflächenfensters wird dieses beispielsweise in eine zuvor in dem Dach ausgebildete Dachöffnung eingesetzt. Vorzugsweise stützt es sich nach der Montage an zumindest einem der Sparren ab, beispielsweise über wenigstens eine der Dachlatten. Besonders bevorzugt ist das Dachflächenfenster nach der Montage an dem Sparren und/oder der Dachlatte befestigt, insbesondere durch Verschrauben. Der Blendrahmen ist hierbei zur ortsfesten Anordnung beziehungsweise Befestigung an dem Dach beziehungsweise in der Dachöffnung des Dachs vorgesehen und ausgebildet. Der Flügelrahmen kann bezüglich des Blendrahmens festgelegt sein, also starr an ihm befestigt sein. Bevorzugt ist der Flügelrahmen jedoch bezüglich des Blendrahmens verlagerbar, nämlich um die wenigstens eine Drehachse verschwenkbar.

Beispielsweise ist der Flügelrahmen bezüglich des Blendrahmens um genau eine Drehachse verschwenkbar. Diese Drehachse liegt - in Einbausituation des Dachfensters - auf einer Oberseite des Flügelrahmens oder zumindest in einem oberen Drittel des Flügelrahmens. Ein solches Dachflächenfenster kann auch als Klappfenster bezeichnet werden. Zusätzlich oder alternativ kann es vorgesehen sein, dass der Flügelrahmen bezüglich des Blendrahmens um eine zweite Drehachse verschwenkbar ist, nämlich um eine von der ersten Drehachse verschiedene zweite Drehachse. Die zweite Drehachse liegt beispielsweise in einem mittleren Drittel des Flügelrahmens. Ist der Flügelrahmen sowohl um die erste Drehachse als auch die zweite Drehachse verschwenkbar, so ist das Dachflächenfenster als Klapp-Schwing-Fenster ausgestaltet.

Die Verwendung des Ionenwindgenerators für das Dachflächenfenster hat den Vorteil, dass einerseits das Lüften des Innenraums durch ein Öffnen des Dachflächenfensters möglich ist. Soll oder kann das Dachflächenfenster nicht zum Lüften des Innenraums geöffnet werden, beispielsweise aufgrund von Wettereinflüssen, so kann das Lüften dennoch erfolgen, nämlich mithilfe des Ionenwindgenerators. Das Lüften kann auf diese Art und Weise zudem besonders einfach benutzerunabhängig erfolgen. Zum Beispiel wird der Ionenwindgenerator zum Fördern der Luft aus dem Innenraum in Richtung der Außenumgebung oder umgekehrt betrieben, sobald ein Zustandsparameter von einem Sollwert abweicht. Als Zustandsparameter kann beispielsweise eine Luftfeuchtigkeit und/oder ein Kohlenstoffdioxidgehalt der Luft in dem Innenraum verwendet werden.

Eine Weiterbildung der Erfindung sieht vor, dass der Flügelrahmen bezüglich des Blendrahmens um wenigstens eine Drehachse verschwenkbar gelagert ist. Auf eine derartige Ausgestaltung wurde bereits hingewiesen. Das Verschwenken des Flügelrahmens ermöglicht ein Öffnen und Schließen des Dachflächenfensters, sodass das Lüften des Innenraums unter Umgehung des Strömungswegs möglich ist, nämlich durch eine Fensteröffnung des Dachflächenfensters. Dies erlaubt eine hohe Flexibilität bei dem Lüften des Innenraums.

Eine Weiterbildung der Erfindung sieht vor, dass der Ionenwindgenerator an einem Horizontalholm des Dachflächenfensters angeordnet ist. Vorstehend wurde bereits erläutert, dass das Dachflächenfenster, insbesondere der Flügelrahmen, mehrere Holme aufweist, nämlich mehrere Vertikalholme und mehrere Horizontalholme, welche miteinander verbunden sind. Bevorzugt sind zwei Vertikalholme und zwei Horizontalholme jeweils parallel zueinander angeordnet. Die Vertikalholme sind hierbei über die Horizontalholme miteinander verbunden und umgekehrt. In der Einbausituation des Dachflächenfensters liegen die Vertikalholme parallel oder zumindest in etwa parallel zu dem Dachsparren vor. Die Horizontalholme sind hingegen bezüglich der Dachsparren angewinkelt, vorzugsweise stehen sie senkrecht oder zumindest in etwa senkrecht auf den Dachsparren oder auf einer parallel zu den Dachsparren verlaufenden Geraden. Der Ionenwindgenerator ist nun an einem der Horizontalholme angeordnet, insbesondere an dem oberen der Horizontalholme. Dies ermöglicht eine gleichmäßige und effektive Lüftung des Innenraums.

Eine Weiterbildung der Erfindung sieht vor, dass in dem Strömungsweg wenigstens ein Strömungsquerschnittsverstellelement angeordnet ist. Das Strömungsquerschnittsverstellelement dient dem Einstellen eines Durchströmungsquerschnitts beziehungsweise einer Durchströmungsquerschnittsfläche des Strömungswegs. Beispielsweise ist das Strömungsquerschnittsverstellelement derart ausgestaltet, dass in einer ersten Einstellung des Strömungsquerschnittsverstellelements der Strömungsweg unterbrochen und in einer zweiten Einstellung zumindest teilweise oder vollständig freigegeben ist. Das Strömungsquerschnittsventil kann grundsätzlich beliebig ausgestaltet sein. Beispielsweise weist es zumindest eine Lüftungsklappe oder ein drehbares Ventilelement auf. Das Strömungsquerschnittsverstellelement ermöglicht ein Einstellen eines Volumenstroms des Luftstroms, sodass ein hoher Komfort erzielt ist.

Eine Weiterbildung der Erfindung sieht vor, dass der Ionenwindgenerator als Einsetzteil ausgebildet ist. Der Ionenwindgenerator bildet insoweit ein Bauteil beziehungsweise eine Baugruppe, welche in das Gebäudeverschlusselement eingesetzt werden kann. Umgekehrt ist der Ionenwindgenerator beschädigungsfrei von dem Gebäudeverschlusselement lösbar, sodass ein einfacher Austausch gewährleistet ist.

Eine Weiterbildung der Erfindung sieht vor, dass der Ionenwindgenerator elektrisch an eine Solarzelle angeschlossen ist, insbesondere über einen Energiespeicher zur Zwischenspeicherung elektrischer Energie. Die zum Betreiben des Ionenwindgenerators notwendige Energie wird insoweit mithilfe der Solarzelle bereitgestellt. Hierzu ist zumindest zeitweise eine elektrische Verbindung zwischen dem Ionenwindgenerator und der Solarzelle hergestellt. Die zum Betreiben des Ionenwindgenerators notwendige Spannung beträgt beispielsweise mindestens 10 kV, mindestens 20 kV oder mindestens 30 kV. Aus diesem Grund ist es vorteilhaft, wenn elektrisch zwischen dem Ionenwindgenerator und der Solarzelle ein Spannungswandler angeordnet ist, der die von der Solarzelle bereitgestellte Spannung in die zum Betreiben des Ionenwindgenerators benötigte Spannung umwandelt.

Zudem kann das Gebäudeverschlusselement den Energiespeicher aufweisen, welcher zu Zwischenspeicherung elektrischer Energie dient. Der Energiespeicher liegt zum Beispiel in Form einer Batterie oder eines Akkumulators vor. Mithilfe des Energiespeichers kann ein Betreiben des Ionenwindgenerators auch dann vorgenommen werden, falls die Solarzelle derzeit keine elektrische Energie zur Verfügung stellt. Das Vorsehen der Solarzelle ermöglicht grundsätzlich einen autarken Betrieb des Ionenwindgenerators ohne externe Stromquelle. Beispielsweise ist es zusätzlich oder alternativ vorgesehen, die von der Solarzelle zur Verfügung gestellte und/oder die in dem Energiespeicher zwischengespeicherte Energie zum Erwärmen der Luft, insbesondere der mittels des Ionenwindgenerators geförderten Luft, zu verwenden. Bevorzugt wird die Luft unter Verwendung der von der Solarzelle bereitgestellten elektrischen Energie erwärmt, falls der Energiespeicher einen Ladestand aufweist, der größer ist als ein Sollladestand.

Gemäß der Erfindung ist vorgesehen, dass der Blendrahmen und/oder der Flügelrahmen an einer Außenseite des Dachflächenfensters zumindest bereichsweise von einem Abdeckblech übergriffen sind, wobei der Strömungsweg zumindest bereichsweise von dem Abdeckblech begrenzt ist. Das Abdeckblech kann mit dem Blendrahmen oder dem Flügelrahmen starr verbunden sein. Es kann jedoch auch vorgesehen sein, dass ein mehrteiliges Abdeckblech vorliegt, wobei ein erstes Teilblech des Abdeckblechs starr mit dem Blendrahmen und ein zweites Teilblech des Abdeckblechs starr mit dem Flügelrahmen verbunden und bezüglich des jeweils anderen Rahmens verlagerbar ist.

Das Abdeckblech übergreift im Querschnitt gesehen bevorzugt den Blendrahmen und den Flügelrahmen vollständig. Es erstreckt sich insoweit im Querschnitt gesehen von einer dem Blendrahmen abgewandten Seite des Flügelrahmens bis hin zu einer dem Flügelrahmen abgewandten Seite des Blendrahmens. Insbesondere übergreift das Abdeckblech die Verglasung bereichsweise, insbesondere einen Rand der Verglasung. Das Abdeckblech schützt den Blendrahmen und/oder den Flügelrahmen, bevorzugt beide, vor Witterungseinflüssen aus der Außenumgebung. Insbesondere behindert das Abdeckblech ein Vordringen von Wasser, insbesondere von Regenwasser, zu dem Blendrahmen beziehungsweise dem Flügelrahmen. Hierzu liegt es auf der Außenseite des Dachflächenfensters vor, also auf der der Außenumgebung zugewandten Seite des Dachflächenfensters.

Das Abdeckblech ist derart ausgestaltet und angeordnet, dass es den Strömungsweg zumindest bereichsweise begrenzt. Das bedeutet, dass der von dem Ionenwindgenerator erzeugte Luftstrom das Abdeckblech bereichsweise anströmt beziehungsweise überströmt. Beispielsweise wird der Strömungsweg im Querschnitt gesehen einerseits von dem Abdeckblech und andererseits von dem Blendrahmen und/oder dem Flügelrahmen und/oder der Verglasung begrenzt. Durch eine derartige Ausgestaltung des Gebäudeverschlusselements werden keine weiteren Elemente zur Ausbildung eines Strömungskanals benötigt, der zumindest einen Teil des Strömungswegs ausmacht, was eine einfache Konstruktion ermöglicht.

Zudem sieht die Erfindung vor, dass in einem der Rahmen, insbesondere in dem Blendrahmen, ein Lüftungskanal ausgebildet ist, der eine Wand des Rahmens unter Ausbildung der ersten Fluidöffnung durchgreift, wobei die zweite Fluidöffnung von dem Abdeckblech, insbesondere zusätzlich von der Verglasung und/oder einem die Verglasung haltenden Verglasungsrahmen, begrenzt ist, und wobei der Lüftungskanal über einen von dem Abdeckblech begrenzten Luftraum mit der zweiten Fluidöffnung strömungstechnisch verbunden ist. Unter dem Rahmen ist entweder der Blendrahmen oder alternativ der Flügelrahmen zu verstehen. Soweit im Rahmen dieser Beschreibung von dem Vorliegen des Lüftungskanals in dem Blendrahmen oder in dem Flügelrahmen die Rede ist, so ist darunter implizit bevorzugt zu verstehen, dass der Lüftungskanal auch in dem jeweils anderen Rahmen ausgestaltet sein kann.

Der Rahmen, insbesondere der Blendrahmen, wird von dem Lüftungskanal durchgriffen. Der Lüftungskanal durchgreift die Wand des Rahmens, sodass die erste Fluidöffnung ausgebildet ist. Die Wand des Rahmens ist vorzugsweise dem Innenraum zugewandt, liegt also auf einer Innenseite des Gebäudeverschlusselements vor. Entsprechend ist der Lüftungskanal über die erste Fluidöffnung strömungstechnisch an den Innenraum angebunden. Es kann vorgesehen sein, dass das Strömungsquerschnittsverstellelement in dem Lüftungskanal angeordnet ist, insbesondere liegt es in der ersten Fluidöffnung vor. Mithilfe des Strömungsquerschnittsverstellelements kann insoweit eine Strömungsquerschnittsfläche des Lüftungskanals und insbesondere der ersten Fluidöffnung eingestellt werden.

Die zweite Fluidöffnung, welche über den Strömungsweg strömungstechnisch an die erste Fluidöffnung angeschlossen ist, wird zumindest bereichsweise von dem Abdeckblech begrenzt. Hierbei kann es beispielsweise vorgesehen sein, dass die zweite Fluidöffnung als randgeschlossene Öffnung in dem Abdeckblech vorliegt. Hierunter ist zu verstehen, dass das Abdeckblech einen durchgehenden Rand der zweiten Fluidöffnung ausbildet. Die zweite Fluidöffnung ist also beispielsweise als Bohrung oder dergleichen in dem Abdeckblech hergestellt. Besonders bevorzugt ist es jedoch vorgesehen, dass die zweite Fluidöffnung von dem Abdeckblech einerseits und der Verglasung und/oder dem Verglasungsrahmen andererseits gemeinsam begrenzt ist. Beispielsweise liegt also die zweite Fluidöffnung zwischen einem freien Ende beziehungsweise einer freien Kante des Abdeckblechs und der Verglasung beziehungsweise dem Verglasungsrahmen vor.

Unter dem Verglasungsrahmen ist insbesondere ein Element zu verstehen, welches die Verglasung gegen den Flügelrahmen drängt beziehungsweise an diesem hält. Hierzu ist der Verglasungsrahmen bevorzugt an dem Flügelrahmen befestigt. Die Verglasung stützt sich insoweit einerseits an dem Flügelrahmen und andererseits an dem Verglasungsrahmen ab, beispielsweise unmittelbar oder lediglich mittelbar, insbesondere jeweils über eine Dichtung. Besonders bevorzugt weist der Verglasungsrahmen zwei Stege auf, welche sich in die von der Verglasung abgewandte Richtung erstrecken und über einen Verbindungssteg miteinander verbunden sind, sodass insgesamt ein U-förmiger Querschnitt vorliegt. Vorzugsweise greift das Abdeckblech mit einem Vorsprung oder einer freien Kante zwischen die beiden Stege ein, sodass also der Vorsprung oder eine von der freien Kante gebildete Randkante des Abdeckblechs in dem U-förmigen Querschnitt des Verglasungsrahmens angeordnet ist. Hierdurch ist eine Labyrinthdichtung geschaffen, welche eine hervorragende Dichtheit des Gebäudeverschlusselements sicherstellt.

Der Lüftungskanal ist über den Luftraum mit der zweiten Fluidöffnung strömungstechnisch verbunden. Beispielsweise mündet der Lüftungskanal durch eine dritte Fluidöffnung in den Luftraum ein, wobei die dritte Fluidöffnung in dem Rahmen, also dem Blendrahmen oder dem Flügelrahmen, ausgebildet ist. Der Luftraum wird zumindest bereichsweise von dem Abdeckblech begrenzt, nämlich in die von dem Rahmen, insbesondere von dem Blendrahmen oder Flügelrahmen, abgewandte Richtung beziehungsweise in die der Außenumgebung zugewandte Richtung. Beispielsweise liegt der Luftraum im Querschnitt gesehen zwischen dem Abdeckblech einerseits und dem Blendrahmen und/oder dem Flügelrahmen andererseits vor. Hierdurch ist eine besonders einfache Ausgestaltung des Gebäudeverschlusselements realisiert, welche jedoch dennoch eine besonders gute Dichtheit sicherstellt.

Eine Weiterbildung der Erfindung sieht vor, dass der Ionenwindgenerator in dem Lüftungskanal und/oder in dem Luftraum angeordnet ist. Strömungstechnisch kann der Ionenwindgenerator also zwischen der ersten Fluidöffnung und der dritten Fluidöffnung vorliegen oder alternativ zwischen der dritten Fluidöffnung und der zweiten Fluidöffnung. Die Anordnung in dem Lüftungskanal hat den Vorteil, dass der Ionenwindgenerator weitergehend vor Umgebungseinflüssen geschützt ist als bei seiner Anordnung in dem Luftraum. Die Anordnung in dem Luftraum hat hingegen den Vorteil, dass eine größere und mithin leistungsstärkere Ausgestaltung des Ionenwindgenerators verwendet werden kann.

Eine Weiterbildung der Erfindung sieht vor, dass der Ionenwindgenerator eine erste Elektrode und eine beabstandet von der ersten Elektrode angeordnete zweite Elektrode aufweist, wobei die erste Elektrode über wenigstens eine Gasentladungsspitze verfügt. Die beiden Elektroden, also die erste Elektrode und die zweite Elektrode, dienen zur Erzeugung des Luftstroms. Hierzu werden sie mit unterschiedlichen elektrischen Potentialen beaufschlagt. Um eine besonders hohe Effizienz zu erzielen, verfügt die erste Elektrode über die wenigstens eine Gasentladungsspitze, wodurch aufgrund des Spitzeneffekts beziehungsweise der sogenannten Spitzenentladung eine hohe elektrische Feldstärke auftritt. Die zweite Elektrode ist hingegen bevorzugt plan ausgestaltet, insbesondere auf ihrer der ersten Elektrode zugewandten Seite.

Zusätzlich kann es vorgesehen sein, dass auf der der ersten Elektrode gegenüberliegenden Seite der zweiten Elektrode beabstandet von dieser eine weitere erste Elektrode angeordnet ist, die über wenigstens eine weitere Gasentladungsspitze verfügt. Bevorzugt ist die weitere erste Elektrode bezüglich der zweiten Elektrode symmetrisch zu der ersten Elektrode angeordnet. Insbesondere ist die weitere erste Elektrode genauso weit von der zweiten Elektrode beabstandet wie die erste Elektrode. Die Verwendung der weiteren ersten Elektrode hat den Vorteil, dass eine Strömungsrichtung des Luftstroms umgekehrt werden kann. Zur Erzeugung des Luftstroms in eine erste Richtung werden die erste Elektrode und die zweite Elektrode mit elektrischer Energie beaufschlagt, zur Erzeugung des Luftstroms in einer der ersten Richtung entgegengesetzten zweiten Richtung die weitere erste Elektrode und die zweite Elektrode. Eine solche Ausgestaltung ermöglicht also sowohl eine Belüftung als auch eine Entlüftung des Innenraums und entsprechend einen besonders flexiblen Betrieb des Gebäudeverschlusselements.

Eine Weiterbildung der Erfindung sieht vor, dass die erste Elektrode und/oder eine weitere erste Elektrode einerseits und die zweite Elektrode andererseits als parallel zueinander angeordnete Bleche ausgebildet sind. Hierunter ist zu verstehen, dass die Elektroden grundsätzlich als plane Elemente ausgestaltet sind, welche in einer ersten Richtung und einer zweiten Richtung deutlich grö-βere Abmessungen aufweisen als in einer dritten Richtung, wobei die drei Richtungen jeweils aufeinander senkrecht stehen. Die Bleche, welche die Elektroden ausbilden, sind parallel zueinander angeordnet. Besonders bevorzugt liegen sie in derselben Ebene, fluchten also in einer Richtung miteinander. Hierbei sind die Elektroden derart ausgerichtet, dass die Gasentladungsspitze der ersten Elektrode der zweiten Elektrode zugewandt ist. Die Ausgestaltung der Elektroden als Bleche ermöglicht eine einfache Herstellung der Elektroden als Stanzblechteile.

Eine Weiterbildung der Erfindung sieht vor, dass die Bleche aus Metall, insbesondere aus Stahl, Edelstahl, Aluminium, Kupfer oder Titan, oder einer entsprechenden Legierung bestehen. In jedem Fall bestehen die Bleche aus einem elektrisch leitenden Material, nämlich bevorzugt aus Metall. Als Metall kann beispielsweise Stahl, Edelstahl, Aluminium, Kupfer oder Titan herangezogen werden. Auch Legierungen aus wenigstens einem der genannten Metalle können selbstverständlich verwendet werden, sodass das Metall beispielsweise eine Stahllegierung, eine Edelstahllegierung, eine Aluminiumlegierung, eine Kupferlegierung oder eine Titanlegierung ist. Die beschriebene Ausgestaltung ermöglicht eine besonders hohe Lebensdauer des Ionenwindgenerators.

Eine Weiterbildung der Erfindung sieht vor, dass der Ionenwindgenerator wenigstens bereichsweise aus einem hydrophoben Material besteht oder mit einer hydrophoben Beschichtung versehen ist. Dies gilt insbesondere für die erste Elektrode und/oder die zweite Elektrode und/oder (soweit vorhanden) für die weitere erste Elektrode. Eine solche Ausgestaltung hat den Vorteil, dass eventuell zu dem Ionenwindgenerator vordringendes Wasser rasch und effizient von diesem abgeführt wird.

Eine Weiterbildung der Erfindung sieht vor, dass der Rahmen ein Hohlprofil aufweist und zumindest eine der Elektroden von einer Armierung des Rahmens gebildet ist. Der Rahmen ist insoweit zumindest bereichsweise nicht massiv ausgestaltet, sondern weist das Hohlprofil auf, welches einen oder mehrere Lufträume enthält. Das Hohlprofil zeichnet sich durch eine Vielzahl von beabstandet voneinander angeordneten Hohlprofilstegen aus, zwischen welchen der wenigstens eine Luftraum angeordnet ist. Besonders bevorzugt schließen die Hohlprofilstege mehrere Lufträume ein, insbesondere zumindest teilweise strömungstechnisch voneinander separierte Lufträume.

Der Rahmen beziehungsweise das Hohlprofil und insbesondere die Hohlprofilstege bestehen bevorzugt aus einem ersten Material, insbesondere aus Kunststoff. Um eine hinreichende Steifigkeit des Rahmens sicherzustellen, verfügt der Rahmen über die Armierung, welche dem Hohlprofil zugeordnet ist. Die Armierung besteht insbesondere aus einem von dem ersten Material verschiedenen zweiten Material mit höherer Steifigkeit beziehungsweise Festigkeit, insbesondere aus Metall. Besonders bevorzugt besteht die Armierung aus Stahl oder Edelstahl.

Die Armierung ist mit dem Hohlprofil verbunden, vorzugsweise liegen zumindest einige der Armierungsstege wenigstens bereichsweise an den Hohlprofilstegen des Hohlprofils an und/oder sind an ihnen befestigt, beispielsweise stoffschlüssig und/oder formschlüssig. Der Rahmen ist derart ausgestaltet, dass die Armierung im Vergleich mit dem Hohlprofil zumindest einen wesentlichen Teil der Festigkeit beziehungsweise Steifigkeit des Rahmens bereitstellt. Beispielsweise erhöht die Armierung des Rahmens dessen Steifigkeit - im Vergleich zu dem ohne Armierung ausgeführten Rahmen - um mindestens 50 %, mindestens 75 % oder mindestens 100 %.

Vorzugsweise verfügt der Rahmen wie vorstehend bereits erwähnt über mehrere Holme, welche miteinander verbunden sind, wobei die Armierung in zumindest einem Teil dieser Holme, besonders bevorzugt jedoch in jedem der Holme vorliegt. Insbesondere durchgreift die Armierung den jeweiligen Holm in Richtung von dessen Längsmittelachse größtenteils, also über mindestens 80 %, mindestens 90 % oder mindestens 95 % seiner Längserstreckung. Hierdurch wird eine besonders hohe Steifigkeit des jeweiligen Holm und somit des gesamten Rahmens erzielt.

Die Armierung soll nun eine Doppelfunktion aufweisen. Zum einen soll sie weiterhin die gewünschte Festigkeit beziehungsweise Steifigkeit des Rahmens bewerkstelligen. Andererseits soll sie den Ionenwindgenerator zumindest teilweise ausbilden. Hierzu ist wenigstens eine der Elektroden des Ionenwindgenerators von der Armierung des Rahmens gebildet. Hierzu ist es notwendig, dass die Armierung zumindest teilweise aus einem leitfähigen Material besteht, insbesondere - wie bereits vorstehend erläutert - aus Metall. Durch die Verwendung der Armierung als Elektrode kann eine besonders kompakte und günstige Ausgestaltung des Gebäudeverschlusselements beziehungsweise des Rahmens erzielt werden. Die Armierung ersetzt nämlich eine bislang eventuell separat vorliegende Elektrode.

Die Armierung verfügt bevorzugt über zwei beabstandet parallel zueinander angeordnete Armierungsstege. Diese beiden Armierungsstege verlaufen bevorzugt parallel zu der Längsmittelachse des jeweiligen Holm des Rahmens beziehungsweise parallel zu einer Verglasungsebene der Verglasung des Gebäudeverschlusselements bei geschlossenen Gebäudeverschlusselement. Von zumindest einem der Armierungsstege geht bevorzugt ein Versteifungssteg aus, welcher im Schnitt, insbesondere im Querschnitt bezüglich der Längsmittelachse des jeweiligen Holms, gegenüber dem Armierungssteg angewinkelt ist, also mit diesem einen Winkel einschließt, welcher größer als 0° und kleiner als 180° ist. Vorzugsweise beträgt der Winkel mindestens 45° und höchstens 135°, mindestens 60° und höchstens 120°, mindestens 80° und höchstens 100° oder in etwa oder genau 90°. Vorzugsweise verläuft der Versteifungssteg also senkrecht oder zumindest in etwa senkrecht zu dem jeweiligen Armierungssteg.

Es kann vorgesehen sein, dass von jedem der Armierungsstege ein solcher Versteifungssteg ausgeht. Es kann jedoch alternativ auch vorgesehen sein, dass die beiden Armierungsstege über einen gemeinsamen Versteifungssteg miteinander verbunden sind. Vorzugsweise ist es vorgesehen, dass die Verbindung über den Versteifungssteg lediglich bereichsweise erfolgt. In diesem Fall verläuft der Strömungsweg insbesondere durch die Armierung hindurch. Vorzugsweise ist der Versteifungssteg durch Öffnungen unterbrochen, durch welche sich der Strömungsweg erstreckt. Alternativ kann es selbstverständlich vorgesehen sein, dass der Versteifungssteg in Längsrichtung der Armierungsstege durchgehend ausgestaltet ist, also die beiden Armierungsstege ununterbrochen verbindet. In diesem Fall verläuft vorzugsweise der Strömungsweg an der Armierung vorbei. In jedem Fall wird die genannte Doppelfunktion der Armierung erzielt.

Die Begrenzung des Strömungswegs durch die Armierung hat zudem den Vorteil, dass die Armierung eine große Wärmekapazität verfügt. Sie dient insoweit als Wärmespeicher einer Temperierung der entlang des Strömungswegs strömenden Luft.

Eine Weiterbildung der Erfindung sieht vor, dass die Armierung einen die erste Fluidöffnung und die zweite Fluidöffnung strömungstechnisch miteinander verbindenden Strömungskanal begrenzt, dessen Längsmittelachse durch eine der Fluidöffnungen verläuft und/oder der im Schnitt gesehen von einer der Fluidöffnungen einen Abstand aufweist, der um einen Faktor von höchstens 2, höchstens 1, 5 oder höchstens 1 größer ist als Abmessungen der jeweiligen Fluidöffnung. Die Armierung begrenzt den Strömungskanal, welcher entlang des Strömungswegs liegt, wenigstens einseitig. Besonders bevorzugt schließt die Armierung im Schnitt gesehen den Strömungskanal jedoch zwischen sich ein. Insbesondere liegt der Strömungskanal im Schnitt gesehen zwischen den Armierungsstegen der Armierung vor. Der Strömungskanal verbindet die erste Fluidöffnung und die zweite Fluidöffnung strömungstechnisch miteinander, der Strömungskanal definiert den Strömungsweg also zumindest bereichsweise beziehungsweise der Strömungsweg verläuft durch den Strömungskanal.

Die Armierung soll nun derart in dem Rahmen angeordnet sein, dass sie aus einer Außenumgebung des Gebäudeverschlusselements einfach erreichbar ist. Hierdurch wird eine Reinigung derjenigen Elektrode des Ionenwindgenerators ermöglicht beziehungsweise erleichtert, welche von der Armierung ausgebildet ist. Hierzu ist eine der nachfolgend beschriebenen Bedingungen erfüllt. Zum einen kann es vorgesehen sein, dass die Längsmittelachse des Strömungskanals - im Querschnitt gesehen - durch eine der Fluidöffnungen, also die erste Fluidöffnung und/oder die zweite Fluidöffnung, verläuft. Das bedeutet schlussendlich, dass die Armierung, die den Strömungskanal begrenzt, zumindest bereichsweise oder sogar vollständig in Überdeckung mit der jeweiligen Fluidöffnung angeordnet ist.

Bevorzugt verläuft die Längsmittelachse des Strömungskanals durch die erste Fluidöffnung, sodass die Armierung beziehungsweise die von ihr gebildete Elektrode aus dem von dem Gebäudeverschlusselement begrenzten Innenraum erreichbar ist. Anders formuliert verläuft eine im Schnitt gesehen mittig durch die Fluidöffnung verlaufende Gerade, die zudem auf einer von der Fluidöffnung vollständig aufgenommenen gedachten Ebene senkrecht steht, durch die Armierung und insbesondere den Strömungskanal hindurch.

Zusätzlich oder alternativ weist die Armierung von der jeweiligen Fluidöffnung einen geringen Abstand auf, um einen einfachen Zugang zur Reinigung beziehungsweise Wartung des Ionenwindgenerators zu schaffen. Beispielsweise ist der Abstand zwischen der Fluidöffnung und der Armierung höchstens so groß wie die Abmessungen der jeweiligen Fluidöffnung im Schnitt gesehen multipliziert mit dem Faktor von höchstens 2,0, höchstens 1,5 oder höchstens 1,0. In letzterem Fall ist die Armierung also höchstens so weit von der Fluidöffnung entfernt wie die Fluidöffnung im Schnitt gesehen groß ist. Unter dem Schnitt ist hierbei vorzugsweise ein Querschnitt zu verstehen, insbesondere durch einen jeweiligen Holm des entsprechenden Rahmens. Hierdurch ist eine besonders gute Erreichbarkeit der Armierung beziehungsweise des Ionenwindgenerators aus der Außenumgebung des Gebäudeverschlusselements sichergestellt.

Eine Weiterbildung der Erfindung sieht vor, dass eine andere der Elektroden strömungstechnisch zwischen der Armierung und der ersten Fluidöffnung oder auf der der ersten Fluidöffnung abgewandten Seite der Armierung angeordnet ist. Unter der anderen der Elektroden ist diejenige der Elektroden zu verstehen, welche nicht von der Armierung ausgebildet ist. Beispielsweise ist diese andere Elektrode strömungstechnisch zwischen der Armierung und der ersten Fluidöffnung angeordnet, beispielsweise greift sie hierbei in die erste Fluidöffnung ein oder schließt sich zumindest unmittelbar an diese an. Eine solche Anordnung der Elektrode stellt eine besonders gute Wartbarkeit des Ionenwindgenerators sicher. Alternativ kann es selbstverständlich vorgesehen sein, dass die andere Elektrode auf der der ersten Fluidöffnung abgewandten Seite der Armierung angeordnet ist. Eine solche Anordnung hat eine höhere Sicherheit des Gebäudeverschlusselements zur Folge, da spannungsführende Bereiche des Ionenwindgenerators tiefer in dem Rahmen angeordnet sind.

Eine Weiterbildung der Erfindung sieht vor, dass die Armierung zwei beabstandet voneinander angeordnete Armierungsstege aufweist, die an gegenüberliegenden Hohlprofilstegen des Hohlprofils anliegen, wobei der Strömungskanal zwischen den Armierungsstegen verläuft. Auf eine solche Ausgestaltung der Armierung wurde bereits hingewiesen. Sie ermöglicht einen besonders großen Durchströmungsquerschnitt des Strömungswegs im Bereich der Armierung, da die Tragfähigkeit beziehungsweise Steifigkeit des Rahmens bereits durch die hohe Tragfähigkeit der Armierung sichergestellt ist und keine weiteren Einschränkungen des Strömungswegs notwendig sind.

Die Armierungsstege erstrecken sich im kartesischen Koordinatensystem in drei unterschiedliche Richtungen. In einer ersten Richtung, nämlich der Längsrichtung der Armierungsstege, weisen die Armierungsstege erste Abmessungen auf, in einer auf der ersten Richtung senkrecht stehenden zweiten Richtung zweite Abmessungen und in einer auf der ersten Richtung und der zweiten Richtung senkrecht stehenden dritten Richtung dritte Abmessungen, welche auch als Materialstärke bezeichnet werden können. Die ersten Abmessungen sind größer als die zweiten Abmessungen, welche wiederum größer als die dritten Abmessungen sind. Beispielsweise sind die ersten Abmessungen um einen Faktor von wenigstens 10, wenigstens 15, wenigstens 20 oder höchstens 25 größer als die zweiten Abmessungen; die zweiten Abmessungen sind hingegen um einen Faktor von wenigstens 5, wenigstens 7,5 oder wenigstens 10 größer als die dritten Abmessungen beziehungsweise die Materialstärke.

Im Schnitt beziehungsweise im Querschnitt gesehen können die Armierungsstege selbstverständlich gebogen und/oder geknickt sein, sodass der von ihnen begrenzte Strömungskanal ebenfalls im Schnitt gesehen gebogen oder geknickt verläuft. Hierdurch ist eine Anpassung der Armierung an den Verlauf des Strömungskanals beziehungsweise an den Strömungsweg erzielt, sodass die von der Armierung gebildete Elektrode eine größere Erstreckung entlang des Strömungswegs aufweist oder zumindest aufweisen kann als bei anderen Ausgestaltungen, beispielsweise bei Ausgestaltungen, für welche die Armierungsstege im Schnitt gesehen durchgehend gerade verlaufen.

Es kann vorgesehen sein, dass die Elektrode integrierter Bestandteil der Armierung ist. Alternativ kann es in einer bevorzugten Ausgestaltung jedoch auch vorgesehen sein, dass die Elektrode von einem Grundkörper der Armierung separierbar ist. Die Elektrode wird also zur Ausbildung des Ionenwindgenerators an der Armierung befestigt. Beispielsweise ist die Elektrode über die Armierung elektrisch an eine Stromquelle angeschlossen, sodass die Elektrode über die Armierung zumindest zeitweise mit elektrischem Strom beaufschlagt wird, um den Ionenwindgenerator zu betreiben. Bevorzugt ist die Elektrode reversibel an dem Grundkörper der Armierung befestigt beziehungsweise befestigbar. Das bedeutet, dass die Elektrode zerstörungsfrei von dem Grundkörper entfernt und wieder an ihm angebracht werden kann. Hierdurch ist eine Reinigung oder ein Austausch der Elektrode besonders einfach möglich. Beispielsweise ist die Elektrode mit dem Grundkörper reversibel verklipst oder verrastet. Bevorzugt ist die Elektrode derart an dem Grundkörper befestigt, dass ein werkzeugloses Montieren und Demontieren möglich ist.

Eine Weiterbildung der Erfindung sieht vor, dass die erste Elektrode Teil von mehreren ersten Elektroden und die zweite Elektrode Teil von mehreren zweiten Elektroden ist, wobei die ersten Elektroden und die zweiten Elektroden parallel beabstandet zueinander angeordnet sind. Insoweit fluchten die ersten Elektroden untereinander miteinander. Dies gilt bevorzugt ebenso für die zweiten Elektroden. Sowohl die ersten Elektroden als auch die zweiten Elektroden sind also jeweils blockartig angeordnet und liegen beabstandet zueinander vor, sodass der Luftstrom zwischen ihnen hindurchströmen kann. Die ersten Elektroden sind wiederum beabstandet von den zweiten Elektroden angeordnet, wobei die Gasentladungsspitzen der ersten Elektroden den zweiten Elektroden zugewandt sind. Bevorzugt fluchten also die ersten Elektroden und die zweiten Elektroden jeweils untereinander miteinander sowie die ersten Elektroden mit den zweiten Elektroden.

Besonders bevorzugt liegen jeweils eine der ersten Elektroden und eine der zweiten Elektroden in einer gedachten Ebene und sind somit beabstandet parallel zueinander angeordnet. Der Abstand zwischen den ersten Elektroden und den zweiten Elektroden liegt in einer ersten Richtung vor. In einer senkrecht auf der ersten Richtung stehenden zweiten Richtung sind hingegen die ersten Elektroden voneinander beabstandet. Auch die zweiten Elektroden sind in der zweiten Richtung voneinander beabstandet, wobei die Abstände zwischen den ersten Elektroden bevorzugt den Abständen zwischen den zweiten Elektroden entsprechen. Hierdurch ist ein besonders einfacher Aufbau des Ionenwindgenerators bei gleichzeitig hoher Effektivität erzielt. Die Ausführungen für die erste Elektrode sind vorzugsweise analog auf die weitere erste Elektrode anwendbar. Auch diese ist also Teil von mehreren weiteren ersten Elektroden.

Eine Weiterbildung der Erfindung sieht vor, dass strömungstechnisch zwischen der zweiten Fluidöffnung und dem Ionenwindgenerator eine Flüssigkeitsfalle, insbesondere in Form eines den Strömungsweg im Querschnitt vollständig durchgreifenden Filters, angeordnet ist. Die Flüssigkeitsfalle ist derart ausgestaltet, dass sie das Vordringen von Wasser, insbesondere von flüssigem Wasser, zu dem Ionenwindgenerator zumindest behindert oder sogar gänzlich verhindert. Hierzu liegt die Flüssigkeitsfalle beispielsweise in Form des Filters vor, welcher insbesondere als Vliesfilter ausgestaltet ist. Beispielsweise ist es vorgesehen, dass der Filter die dritte Fluidöffnung auf ihrer der zweiten Fluidöffnung zugewandten Seite vollständig übergreift. Dies ist insbesondere der Fall, falls der Ionenwindgenerator in dem Lüftungskanal angeordnet ist. Die beschriebene Ausgestaltung stellt eine lange Lebensdauer des Ionenwindgenerators sicher.

Eine Weiterbildung der Erfindung sieht vor, dass in dem Strömungsweg ein Wärmeübertrager zur Temperierung der entlang des Strömungswegs strömenden Luft angeordnet ist. Der Wärmeübertrager kann zum Heizen oder zum Kühlen der Luft vorgesehen und ausgebildet sein. Besonders bevorzugt wird der Wärmeübertrager zeitweise zum Kühlen und zeitweise zum Erwärmen der Luft betrieben. Der Wärmeübertrager wird beispielsweise von einem Kühlmittel oder dergleichen durchströmt. Die Temperatur des Kühlmittels wird dabei derart eingestellt, dass die gewünschte Temperatur der Luft erzielt wird. Der Wärmeübertrager kann zusätzlich oder alternativ einen Wärmespeicher aufweisen. Der Wärmespeicher verfügt insbesondere über ein Wärmespeichermaterial, bevorzugt ein Latentwärmespeichermaterial. Das Latentwärmespeichermaterial nutzt die für eine Phasenänderung notwendige Wärme, um Wärme zu speichern. Die beschriebene Ausgestaltung ermöglicht auf einfache Art und Weise ein Temperieren der Luft, sodass ein hoher Komfort für einen Benutzer des Innenraums sichergestellt ist.

Besonders vorteilhaft ist bei Verwendung des Wärmeübertragers, insbesondere des Wärmespeichers, die Durchführung eines alternierenden Betriebs des Ionenwindgenerators. Im Zuge des alternierenden Betriebs wird die Strömungsrichtung der Luft periodisch umgekehrt, also der Ionenwindgenerator derart betrieben, dass die Strömungsrichtung abwechselnd einer ersten Strömungsrichtung und einer der ersten Strömungsrichtung entgegengesetzten zweiten Strömungsrichtung entspricht. Hierdurch kann eine Wärmerückgewinnung vorgenommen werden. Insbesondere ist es hierzu vorteilhaft, mehrere Gebäudeverschlusselemente vorzusehen, deren Ionenwindgeneratoren mit wechselnder, jedoch zueinander gegensätzlicher Strömungsrichtung betrieben werden. Beispielsweise wird ein erstes Gebäudeverschlusselement für ein Fördern von Luft aus der Außenumgebung in den Innenraum und ein zweites Gebäudeverschlusselement für ein Fördern von Luft aus dem Innenraum in die Außenumgebung verwendet. Nach einer bestimmten Zeit werden umgekehrte Strömungsrichtungen eingestellt, also das erste Gebäudeverschlusselement für ein Fördern der Luft aus dem Innenraum in die Außenumgebung und das zweite Gebäudeverschlusselement für ein Fördern der Luft aus der Außenumgebung in den Innenraum betrieben. Entsprechend liegt zumindest funktional ein Kreuzwärmetauscher vor.

Eine Weiterbildung der Erfindung sieht vor, dass die erste Elektrode und/oder die zweite Elektrode den Wärmeübertrager bilden. Beispielsweise ist es also vorgesehen, dass das Kühlmittel die erste Elektrode beziehungsweise die zweite Elektrode zum Temperieren der Luft durchströmt. Zusätzlich oder alternativ kann dies für die weitere erste Elektrode der Fall sein. Zusätzlich oder alternativ verfügen die erste Elektrode und/oder die zweite Elektrode über das Wärmespeichermaterial, insbesondere das Latentwärmespeichermaterial. Auf die entsprechenden Ausführungen wird hingewiesen. Durch die Verwendung der ersten Elektrode und/oder der zweiten Elektrode als Wärmeübertrage oder zumindest als Teil des Wärmeübertragers ist eine besonders kompakte Ausgestaltung des Gebäudeverschlusselements realisierbar.

Eine Weiterbildung der Erfindung sieht vor, dass der Wärmeübertrager wenigstens ein Peltier-Element aufweist. Das Peltier-Element wird zum Temperieren der Luft mit elektrischer Energie beaufschlagt und kann entweder dem Kühlen oder dem Erwärmen der Luft dienen. Die Verwendung des Peltier-Elements ermöglicht ein besonders einfaches Temperieren der Luft ohne bewegliche Elemente. Zusätzlich oder alternativ zu dem Peltier-Element kann ein Heizwiderstand Bestandteil des Wärmeübertrager sein. Der Heizwiderstand dient einem Aufheizen der Luft und ist besonders kostengünstig herstellbar.

Eine Weiterbildung der Erfindung sieht vor, dass der Wärmeübertrager an dem Abdeckblech angeordnet ist, insbesondere das Abdeckblech durchgreift. Mithilfe des Wärmeübertragers kann insoweit ein Übertragen von Wärme zwischen der Außenumgebung und dem Luftstrom realisiert werden. Es kann vorgesehen sein, dass der Wärmeübertrager ausschließlich auf der Außenseite des Abdeckblechs angeordnet ist und insoweit lediglich mittelbar, nämlich über das Abdeckblech, wärmeübertragend mit dem Luftstrom in Verbindung steht. Zusätzlich oder alternativ liegt der Wärmeübertrager auf der Innenseite des Abdeckblechs vor. Entsprechend ist eine direkte Wärmeübertragungsverbindung zwischen dem Wärmeübertrager und dem Luftstrom hergestellt. Besonders bevorzugt ist der an dem Abdeckblech angeordnete Wärmeübertrager als Peltier-Element ausgestaltet oder weist das wenigstens eine Peltier-Element zumindest auf.

Eine Weiterbildung der Erfindung sieht vor, dass der Wärmeübertrager Wärmeübertragungsrippen aufweist, die in den Strömungsweg und/oder eine Außenumgebung hineinragen. Die Wärmeübertragungsrippen dienen zur Vergrößerung der für die Wärmeübertragung zur Verfügung stehenden Oberfläche des Wärmeübertragers. Sie ermöglichen insoweit eine besonders effektive und effiziente Temperierung des Luftstroms.

Eine Weiterbildung der Erfindung sieht vor, dass in dem Strömungsweg wenigstens ein Schalldämpfer angeordnet ist, insbesondere ein Absorptionsschalldämpfer, ein Resonanzschalldämpfer oder ein Labyrinthschalldämpfer. Der Schalldämpfer dient einer akustischen Separierung des Innenraums von der Außenumgebung. Entsprechend verhindert der Schalldämpfer, dass Störschall aus der Außenumgebung in den Innenraum oder umgekehrt gelangt. Besonders bevorzugt ist der Schalldämpfer als Absorptionsschalldämpfer, Resonanzschalldämpfer oder Labyrinthschalldämpfer ausgebildet. Diese ermöglichen ein besonders effektives Dämpfen des Störschalls, also eine deutliche Reduzierung eines störenden Lärmpegels.

Eine Weiterbildung der Erfindung sieht vor, dass der Strömungsweg zur Ausbildung des Absorptionsschalldämpfers zumindest bereichsweise von einem schallabsorbierenden und/oder schalldämpfenden Material begrenzt ist und/oder strömungstechnisch mit einem den Resonanzschalldämpfer bildenden Helmholtz-Resonator verbunden ist, der insbesondere in Form eines Lochplattenabsorbers vorliegt. Das schallabsorbierende beziehungsweise schalldämpfende Material ist beispielsweise an dem Abdeckblech, dem Blendrahmen und/oder dem Flügelrahmen angeordnet. Der zusätzlich oder alternativ vorgesehene Helmholtz-Resonator mündet entlang des Strömungswegs in diesen ein. Beispielsweise wird der Helmholtz-Resonator von dem Lochplattenabsorber gebildet, welcher den Strömungsweg zumindest abschnittsweise begrenzt. Die beschriebene Ausgestaltung der Schalldämpfer ermöglicht ein besonders effektives Dämpfen von Störgeräuschen.

Die Erfindung betrifft weiterhin ein Verfahren zum Betreiben eines Gebäudeverschlusselements, insbesondere eines Gebäudeverschlusselements gemäß den Ausführungen im Rahmen dieser Beschreibung. Dabei ist vorgesehen, dass das Gebäudeverschlusselement eine erste Fluidöffnung und eine zweite Fluidöffnung aufweist, die über einen Strömungsweg strömungstechnisch zumindest zeitweise miteinander verbunden sind, wobei in dem Strömungsweg ein Ionenwindgenerator angeordnet ist, der zumindest zeitweise zum Erzeugen eines Luftstroms entlang des Strömungswegs betrieben wird.

Auf die Vorteile einer derartigen Ausgestaltung des Gebäudeverschlusselements beziehungsweise einer derartigen Vorgehensweise wurde bereits hingewiesen. Sowohl das Gebäudeverschlusselement als auch das Verfahren zu seinem Betreiben können gemäß den Ausführungen im Rahmen dieser Beschreibung weitergebildet sein, sodass insoweit auf diese verwiesen wird.

Eine Weiterbildung der Erfindung sieht vor, dass mittels eines Temperatursensors eine Temperatur gemessen wird und das Betreiben des Ionenwindgenerators lediglich zugelassen wird, falls die Temperatur größer ist als eine Taupunkttemperatur. Unterschreitet die Temperatur die Taupunkttemperatur, so kann es bei einem Betreiben des Ionenwindgenerators zu einem Ausfallen von Wasser aus dem Luftstrom an den Ionenwindgenerator kommen. Um feuchtigkeitsbedingte Betriebsbeeinträchtigungen und/oder Beschädigungen des Ionenwindgenerators zu vermeiden, wird der Ionenwindgenerator entsprechend deaktiviert, falls die Temperatur kleiner oder gleich der Taupunkttemperatur ist. Umgekehrt wird also das Betreiben des Ionenwindgenerators lediglich dann zugelassen oder durchgeführt, falls die Temperatur größer ist als die Taupunkttemperatur. Hierdurch werden eine hohe Betriebssicherheit und eine lange Lebensdauer des Gebäudeverschlusselements sichergestellt.

Eine Weiterbildung der Erfindung sieht vor, dass die Taupunkttemperatur anhand einer gemessenen Luftfeuchtigkeit berechnet wird. Die Taupunkttemperatur hängt im Wesentlichen von der Luftfeuchtigkeit der Luft ab. Aus diesem Grund wird die Luftfeuchtigkeit gemessen, beispielsweise in der Außenumgebung, in dem Innenraum und/oder entlang des Strömungswegs. Aus dieser gemessenen Luftfeuchtigkeit wird anschließend die Taupunkttemperatur berechnet, sodass diese mit einer hohen Genauigkeit vorliegt.

Eine Weiterbildung der Erfindung sieht vor, dass mittels eines Differenzdrucksensors eine Druckdifferenz über den Ionenwindgenerator gemessen und das Betreiben des Ionenwindgenerators lediglich zugelassen wird, falls die Druckdifferenz in einem bestimmten Druckdifferenzbereich liegt. Der Differenzdrucksensor besteht beispielsweise aus mehreren Sensorelementen, wobei eines der Sensorelemente den Druck einerseits des Ionenwindgenerators und ein anderes der Sensorelemente den Druck andererseits des Ionenwindgenerators misst. Aus den gemessenen Drücken wird anschließend die Druckdifferenz berechnet. Selbstverständlich kann die Druckdifferenz auch unmittelbar gemessen werden.

Liegt die Druckdifferenz außerhalb des Druckdifferenzbereichs, so wird der Ionenwindgenerator deaktiviert. Entsprechend wird das Betreiben des Ionenwindgenerators lediglich dann zugelassen, falls die Druckdifferenz in dem Druckdifferenzbereich liegt. Hierdurch wird verhindert, dass mittels des Ionenwindgenerators einer Luftströmung entgegengewirkt wird, die aufgrund einer Druckdifferenz zwischen dem Innenraum und der Außenumgebung vorliegt. Auch kann der Ionenwindgenerator abgeschaltet werden, sofern die Druckdifferenz zwischen dem Innenraum und der Au-βenumgebung ohnehin bereits hinreichend ist, um den gewünschten Luftstrom zu erzeugen. Hierdurch wird eine deutliche Energieeinsparung bei dem Betreiben des Gebäudeverschlusselements erzielt. Zudem wird der Ionenwindgenerator vor einem unerwünschten Feuchtigkeitseintrag geschützt.

Beispielsweise könnte es vorgesehen sein, dass der Ionenwindgenerator deaktiviert wird, sofern das Gebäudeverschlusselement geöffnet wird. Insbesondere wird der Ionenwindgenerator betrieben, falls das Gebäudeverschlusselement geschlossen ist, und abgeschaltet, falls es geöffnet ist. Dies ist vorzugsweise der Fall, wenn das Gebäudeverschlusselement in Form eines Fensters oder einer Tür vorliegt. Die beschriebene Ausgestaltung ermöglicht eine deutliche Energieeinsparung, indem der Ionenwindgenerator lediglich dann betrieben wird, wenn dies zum Lüften des Innenraums sinnvoll und/oder notwendig ist.

Die Erfindung wird nachfolgend anhand der in der Zeichnung dargestellten Ausführungsbeispiele näher erläutert, ohne dass eine Beschränkung der Erfindung erfolgt. Dabei zeigt:
- Figur 1: eine schematische Darstellung eines Gebäudeverschlusselements in einer ersten Ausführungsform,
- Figur 2: eine schematische Darstellung des Gebäudeverschlusselements in einer zweiten Ausführungsform,
- Figur 3: eine schematische Darstellung des Gebäudeverschlusselements in einer dritten Ausführungsform, sowie
- Figur 4: eine schematische Darstellung des Gebäudeverschlusselements in einer vierten Ausführungsform,
- Figur 5: eine schematische Darstellung des Gebäudeverschlusselements in einer fünften Ausführungsform,
- Figur 6: eine schematische Darstellung des Gebäudeverschlusselements in einer sechsten Ausführungsform.

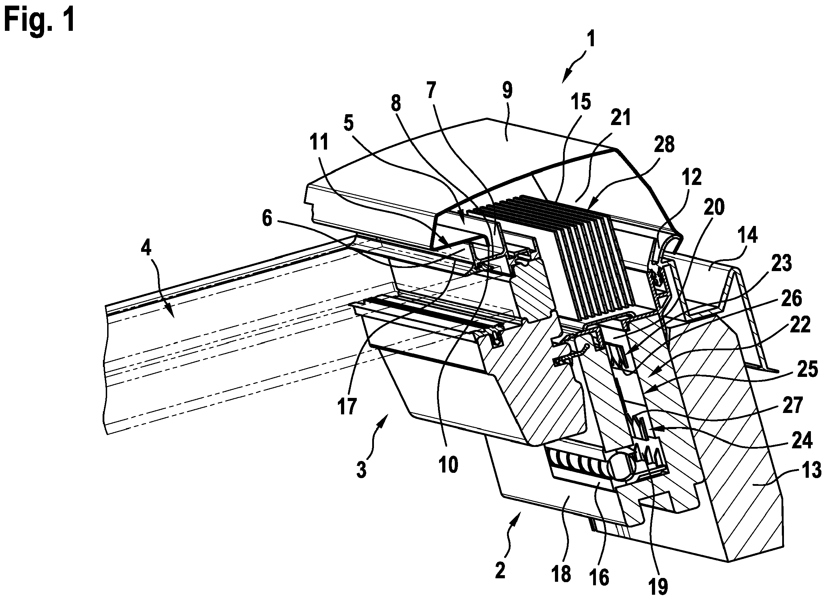

Die Figur 1 zeigt eine schematische Darstellung eines Gebäudeverschlusselements 1 in einer ersten Ausführungsform. Das Gebäudeverschlusselement 1 liegt hierbei als Dachflächenfenster vor. Das Dachflächenfenster 1 weist einen Blendrahmen 2 sowie einen Flügelrahmen 3 auf, wobei letzterer eine Verglasung 4 trägt, welche hier als Doppelverglasung ausgestaltet ist. Die Verglasung 4 wird mittels eines Verglasungsrahmens 5 an dem Flügelrahmen 3 gehalten. Hierzu ist der Verglasungsrahmen 5 an dem Flügelrahmen 3 befestigt und drängt die Verglasung 4 an den Flügelrahmen 3. Der Verglasungsrahmen 5 weist zwei Stege 6 und 7 auf, welche über einen Verbindungssteg 8 unter Ausbildung eines U-förmigen Querschnitts miteinander verbunden sind.

Der Blendrahmen 2 und der Flügelrahmen 3 sind im Querschnitt gesehen von einem Abdeckblech 9 vollständig übergriffen. Eine Randkante 10 des Abdeckblechs 9 greift zwischen die Stege 6 und 7 ein, sodass sie in dem U-förmigen Querschnitt angeordnet ist. Hierdurch wird eine Labyrinthdichtung 11 realisiert. Es ist erkennbar, dass sich das Abdeckblech 9 ausgehend von der Randkante 10 im Querschnitt gesehen zunächst in die von dem Blendrahmen 2 abgewandte Richtung erstreckt, sodass es die Verglasung 4 überlappt. Anschließend läuft es unter Ausbildung eines U-förmigen Querschnitts zurück in Richtung des Blendrahmens 2 und übergreift diesen bis auf seine dem Flügelrahmen 3 abgewandte Seite. Dort wirkt es mit einer Dichtung 12 dichtend zusammen, welche an dem Blendrahmen 2 befestigt ist. Das Gebäudeverschlusselement 1 kann optional über einen Dämmblock 13 und/oder ein Eindeckblech 14 verfügen.

In dem Dachflächenfenster 1 ist ein Strömungsweg 15 ausgebildet, der eine erste Fluidöffnung 16 und eine zweite Fluidöffnung 17 strömungstechnisch miteinander verbindet. Die erste Fluidöffnung 16 ist in einer Wand 18 eines Rahmens, in dem dargestellten Ausführungsbeispiel des Blendrahmens 2, ausgebildet, indem ein in dem Rahmen, insbesondere also dem Blendrahmen 2, ausgebildeter Lüftungskanal 19 die Wand 18 durchgreift. Die zweite Fluidöffnung 17 wird hingegen im Querschnitt gesehen einerseits von dem Abdeckblech 9 und andererseits von der Verglasung 4 begrenzt. Der Strömungsweg 15 verläuft in dem hier dargestellten Ausführungsbeispiel über die Labyrinthdichtung 11. Der Lüftungskanal 19 tritt auf seiner der ersten Fluidöffnung 16 abgewandten Seite über eine dritte Fluidöffnung 20 in einen Luftraum 21 ein, der von dem Abdeckblech 9 zumindest bereichsweise begrenzt ist. Der Luftraum 21 liegt strömungstechnisch zwischen der dritten Fluidöffnung 20 und der zweiten Fluidöffnung 17 vor.

In dem Strömungsweg 15, in dem hier dargestellten Ausführungsbeispiel in dem Lüftungskanal 19, ist ein Ionenwindgenerator 22 zur Erzeugung eines Luftstroms entlang des Strömungswegs 15 angeordnet. Der Ionenwindgenerator 22 weist eine erste Elektrode 23, eine weitere erste Elektrode 24 sowie eine zweite Elektrode 25 auf. Die Elektroden 23, 24, 25 sind als parallel zueinander angeordnete Bleche ausgestaltet. Die ersten Elektroden 23 und 24 weisen hierbei Gasentladungsspitzen 26 beziehungsweise 27 auf, die auf der jeweils der zweiten Elektrode 25 zugewandten Seite der entsprechenden Elektrode 23 beziehungsweise 24 angeordnet ist. Zusätzlich zu dem Ionenwindgenerator 22 ist in dem hier dargestellten Ausführungsbeispiel ein Wärmeübertrager 28 zur Temperierung des Luftstroms ausgebildet. Der Wärmeübertrager 28 liegt hierbei beispielsweise als Plattenwärmeübertrager vor.

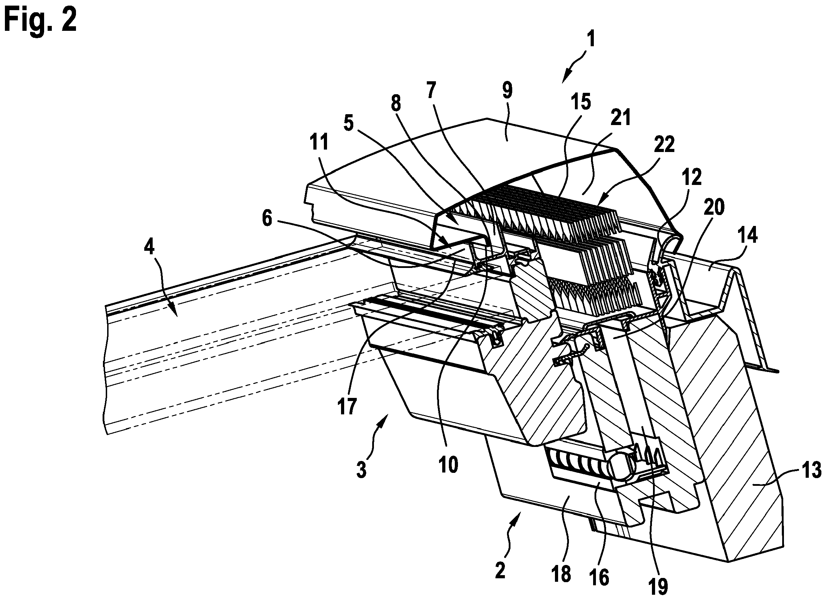

Die Figur 2 zeigt das Gebäudeverschlusselement beziehungsweise das Dachflächenfenster 1 schematisch in einer zweiten Ausführungsform. Diese ähnelt der ersten Ausführungsform, sodass grundsätzlich auf die entsprechenden Ausführungen verwiesen und nachfolgend lediglich auf die Unterschiede eingegangen wird. Diese liegen darin, dass der Ionenwindgenerator 22 nunmehr außerhalb des Lüftungskanals 19 in dem Strömungsweg 15 angeordnet ist, nämlich in dem Luftraum 21. Gleichzeitig bilden die Elektroden 23, 24 und 25 vorzugsweise den Wärmeübertrager 28 aus. Es ist zudem erkennbar, dass jeweils mehrere erste Elektroden 23, mehrere weitere erste Elektroden 24 und mehrere zweite Elektroden 25 vorliegen, welche untereinander parallel zueinander angeordnet sind. Hierdurch wird eine besonders hohe Leistungsfähigkeit des Ionenwindgenerators 22 erzielt.

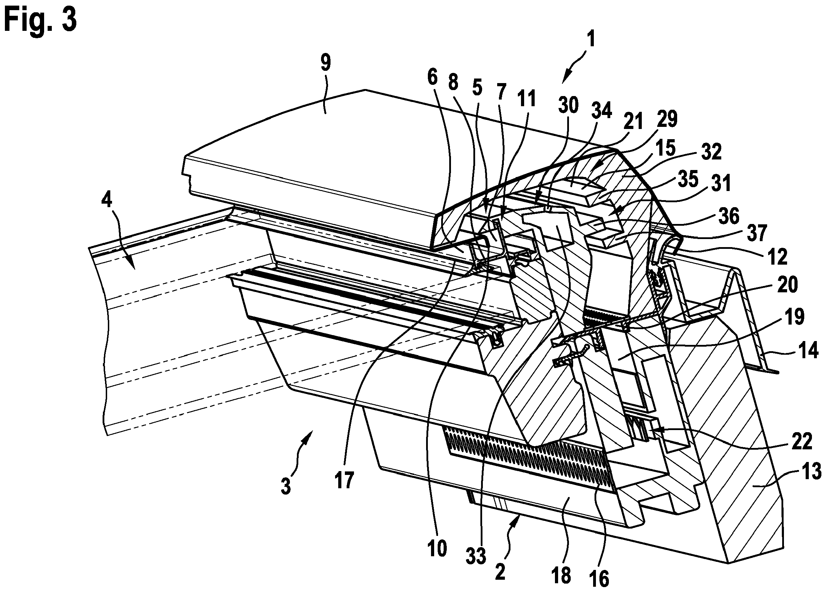

Die Figur 3 zeigt das Gebäudeverschlusselement beziehungsweise das Dachflächenfenster 1 schematisch in einer dritten Ausführungsform. Erneut wird auf die vorstehenden Ausführungen hingewiesen und lediglich auf die Unterschiede eingegangen. Diese liegen darin, dass in dem Strömungsweg 15 mehrere Schalldämpfer 29, 30 und 31 angeordnet sind. Der Schalldämpfer 29 liegt hierbei als Absorptionsschalldämpfer, der Schalldämpfer 30 als Resonanzschalldämpfer, und der Schalldämpfer 31 als Labyrinthschalldämpfer vor. Zur Ausbildung des Absorptionsschalldämpfers 29 ist der Strömungsweg 15 zumindest bereichsweise mit einem schallabsorbierenden oder schalldämpfenden Material 32 begrenzt.

In dem hier dargestellten Ausführungsbeispiel liegt das Material 32 blockartig unterhalb des Abdeckblechs 9 vor, insbesondere erstreckt es sich von dem Abdeckblech 9 bis hin zu dem Blendrahmen 2 und umgreift die dritte Fluidöffnung 20. Das Material 32 kann Bestandteil des Abdeckblechs 9 sein. Der Resonanzschalldämpfer 30 liegt als Helmholtz-Resonator vor, wozu eine Resonanzkammer 33 über einen durchströmungsquerschnittskleineren Verbindungskanal 34 an den Strömungsweg 15 strömungstechnisch angeschlossen ist. Insbesondere mündet der Verbindungskanal 34 unmittelbar in den Strömungsweg 15 ein. Der Labyrinthschalldämpfer 31 schließlich wird durch das wechselseitige Vorspringen mehrerer Stege 35, 36 und 37 in den Strömungsweg 15 erzielt.

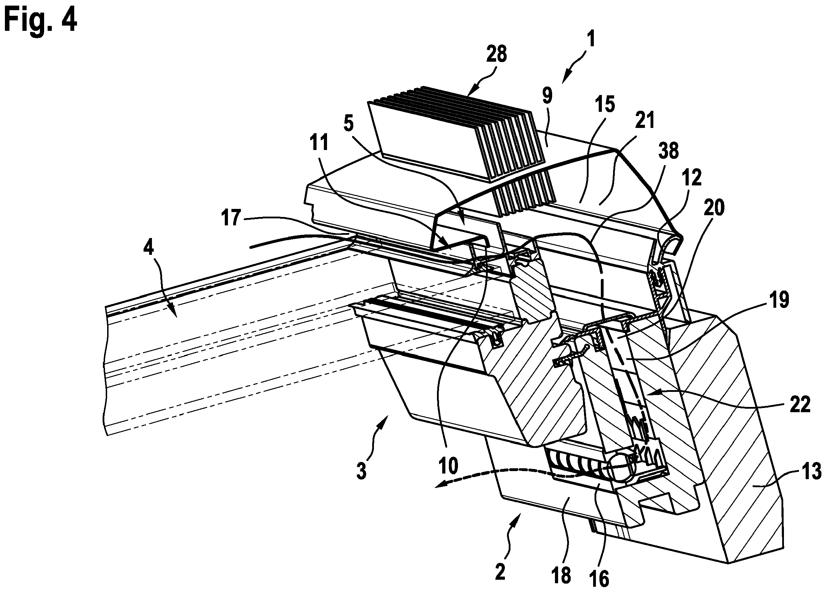

Die Figur 4 zeigt eine schematische Darstellung des Gebäudeverschlusselements 1 in einer vierten Ausführungsform. Erneut wird auf die vorstehenden Ausführungen verwiesen und lediglich auf die Unterschiede eingegangen. Diese liegen darin, dass der Wärmeübertrager 28 das Abdeckblech 9 durchgreift. Bevorzugt weist der Wärmeübertrager 28 wenigstens ein Peltier-Element auf, sodass bei Beaufschlagung des Wärmeübertragers 28 mit elektrischer Energie ein Temperieren des Luftstroms erfolgt. Dies ist durch den Pfeil 38 angedeutet.

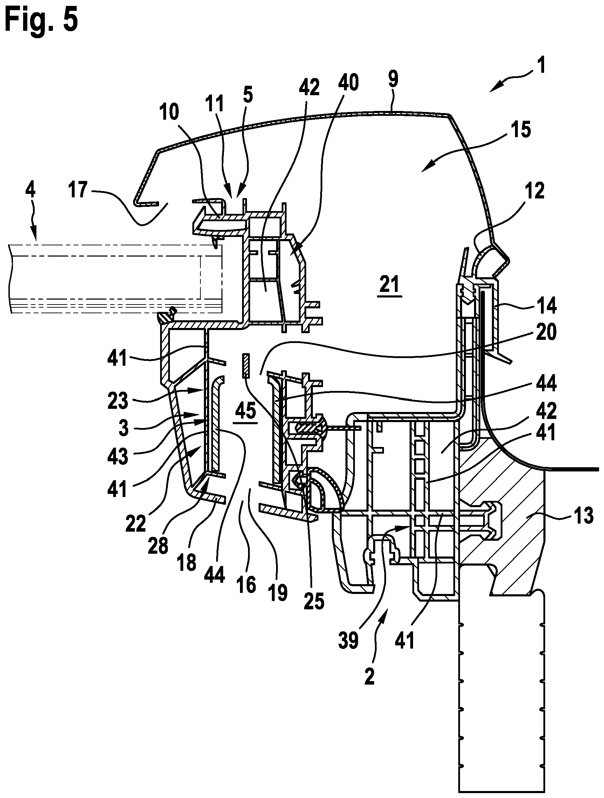

Die Figur 5 zeigt eine schematische Darstellung des Gebäudeverschlusselements 1 in einer fünften Ausführungsform. Da der Aufbau des Gebäudeverschlusselements 1 in dieser Ausführungsform grundsätzlich ähnlich zu den vorstehend beschriebenen Ausführungsformen ist, wird auf die entsprechenden Ausführungen verwiesen und nachfolgend lediglich auf die Unterschiede eingegangen. Diese liegen zum Teil darin, dass sowohl der Blendrahmen 2 als auch der Flügelrahmen 3 jeweils mit einem Hohlprofil 39 beziehungsweise 40 ausgestaltet sind. Jedes der Hohlprofile 39 und 40 verfügt über mehrere Hohlprofilstege 41, von welchen jeweils lediglich einige beispielhaft gekennzeichnet sind. Die Hohlprofilstege 41 jedes Hohlprofils 39 und 40 trennen Lufträume 42 voneinander ab, wobei auch von den Lufträumen 42 lediglich einige beispielhaft mit Bezugszeichen versehen sind. Der Blendrahmen 2 und der Flügelrahmen 3 sind insoweit - anders als bei den ersten bis vierten Ausführungsformen - nicht massiv ausgestaltet, sondern weisen die Hohlprofile 39 beziehungsweise 40 auf.

Der Blendrahmen 2 und der Flügelrahmen 3 sind bevorzugt aus Kunststoff. Um eine hinreichende Festigkeit beziehungsweise Steifigkeit des Blendrahmens 2 und des Flügelrahmens 3 zu erzielen, verfügt zumindest einer der Rahmen 2 und 3, in dem hier dargestellten Ausführungsbeispiel der Flügelrahmen 3, über eine Armierung 43. Die Armierung 43 weist beabstandet zueinander angeordnete Armierungsstege 44 auf, die gemeinsam einen Strömungskanal 45 begrenzen beziehungsweise - in dem hier dargestellten Querschnitt - zwischen sich aufnehmen. Der Strömungskanal 45 verbindet die erste Fluidöffnung 16 und die zweite Fluidöffnung 17 strömungstechnisch miteinander. Der Strömungskanal 45 liegt also entlang des Strömungswegs 15 vor beziehungsweise bildet einen Teil des Strömungswegs 15.

Die Armierung 43 bildet wenigstens eine der Elektroden 23 und 25, in dem hier dargestellten Ausführungsbeispiel die erste Elektrode 23. Benachbart zu der Armierung 43 ist die zweite Elektrode 25 in dem Strömungsweg 15 angeordnet. In dem dargestellten Ausführungsbeispiel begrenzen die Armierungsstege 44 die dritte Fluidöffnung 20, über welche der Lüftungskanal 19 in den Luftraum 21 einmündet. Im Unterschied zu den vorstehend beschriebenen Ausführungsformen liegt für die fünfte Ausführungsform die erste Fluidöffnung 16 in dem Flügelrahmen 3 und die zweite Fluidöffnung 17 in dem Abdeckblech 9 vor. Der Strömungsweg 15 verläuft also zunächst durch den Flügelrahmen 3 und gelangt anschließend in den Luftraum 21, welcher von dem Blendrahmen 2, dem Flügelrahmen 3 und dem Abdeckblech 9 gemeinsam begrenzt ist. Anschließend mündet er über die in dem Abdeckblech 9 ausgebildete zweite Fluidöffnung 17 in die Außenumgebung ein.

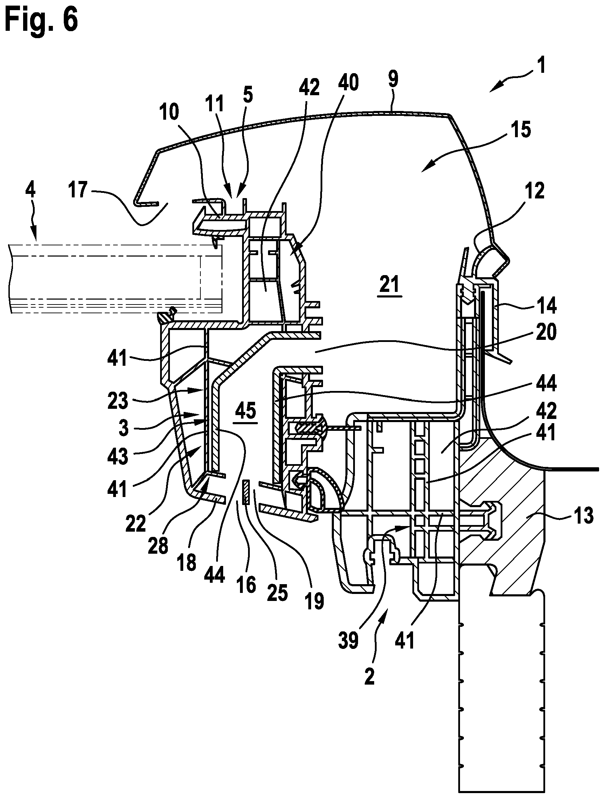

Die Figur 6 zeigt eine schematische Darstellung einer sechsten Ausführungsform des Gebäudeverschlusselements 1. Zu dieser wird insbesondere auf die Ausführungen zu der fünften Ausführungsform hingewiesen und nachfolgend lediglich auf die Unterschiede eingegangen. Diese liegen darin, dass die zweite Elektrode 25 nun auf der der ersten Fluidöffnung 16 zugewandten Seite der Armierung 43 angeordnet ist und nicht - wie dies für das Gebäudeverschlusselement 1 in der fünften Ausführungsform der Fall ist - auf der der ersten Fluidöffnung 16 abgewandten Seite der Armierung 43. Zudem ist die Armierung 43 an den Verlauf des Strömungswegs 15 angepasst, sodass der Strömungskanal 45 über eine größere Strecke vorliegt. Insbesondere erstreckt sich die Armierung 43 bis hin zu dem Luftraum 21. Auch mit einer derartigen Ausgestaltung des Gebäudeverschlusselements 1 werden die zuvor genannten Vorteile zuverlässig erreicht.

Das beschriebene Gebäudeverschlusselement 1 ermöglicht ein geräuscharmes und energieeffizientes Lüften eines Innenraums, welcher von dem Gebäudeverschlusselement 1 von einer Au-βenumgebung abgetrennt ist.

### BEZUGSZEICHENLISTE

- 1: Gebäudeverschlusselement
- 2: Blendrahmen
- 3: Flügelrahmen
- 4: Verglasung
- 5: Verglasungsrahmen
- 6: Steg
- 7: Steg
- 8: Verbindungssteg
- 9: Abdeckblech
- 10: Randkante
- 11: Labyrinthdichtung
- 12: Dichtung
- 13: Dämmblock
- 14: Eindeckblech
- 15: Strömungsweg
- 16: erste Fluidöffnung
- 17: zweite Fluidöffnung
- 18: Wand
- 19: Lüftungskanal
- 20: dritte Fluidöffnung
- 21: Luftraum
- 22: Ionenwindgenerator
- 23: erste Elektrode
- 24: weitere erste Elektrode
- 25: zweite Elektrode
- 26: Gasentladungsspitze
- 27: Gasentladungsspitze
- 28: Wärmeübertrager
- 29: Schalldämpfer
- 30: Schalldämpfer
- 31: Schalldämpfer
- 32: schalldämpfendes Material
- 33: Resonanzkammer
- 34: Verbindungskanal
- 35: Steg
- 36: Steg
- 37: Steg
- 38: Pfeil
- 39: Hohlprofil
- 40: Hohlprofil
- 41: Hohlprofilsteg
- 42: Luftraum
- 43: Armierung
- 44: Armierungssteg
- 45: Strömungskanal

## Patentansprüche

1. Gebäudeverschlusselement (1), ausgestaltet als Dachflächenfenster, das einen Blendrahmen (2) und einen eine Verglasung (4) des Dachflächenfensters tragenden Flügelrahmen (3) aufweist, und mit einer ersten Fluidöffnung (16) und einer zweiten Fluidöffnung (17), die über einen Strömungsweg (15) strömungstechnisch zumindest zeitweise miteinander verbunden sind, wobei der Blendrahmen (2) und/oder der Flügelrahmen (3) auf einer Außenseite des Dachflächenfensters zumindest bereichsweise von einem Abdeckblech (9) übergriffen sind und der Strömungsweg (15) zumindest bereichsweise von dem Abdeckblech (9) begrenzt ist, und wobei in einem der Rahmen (2, 3) ein Lüftungskanal (19) ausgebildet ist, der eine Wand (18) des Rahmens (2, 3) unter Ausbildung der ersten Fluidöffnung (16) durchgreift, die zweite Fluidöffnung (17) von dem Abdeckblech (9) begrenzt ist und der Lüftungskanal (19) über einen von dem Abdeckblech (9) begrenzten Luftraum (21) mit der zweiten Fluidöffnung (17) strömungstechnisch verbunden ist, **dadurch gekennzeichnet, dass** in dem Strömungsweg (15) ein Ionenwindgenerator (22) zum Erzeugen eines Luftstroms entlang des Strömungswegs (15) angeordnet ist.

2. Gebäudeverschlusselement nach Anspruch 1, **dadurch gekennzeichnet, dass** der Ionenwindgenerator (22) eine erste Elektrode (23) und eine beabstandet von der ersten Elektrode (23) angeordnete zweite Elektrode (25) aufweist, wobei die erste Elektrode (23) über wenigstens eine Gasentladungsspitze (26) verfügt.

3. Gebäudeverschlusselement nach einem der vorhergehenden Ansprüche, **dadurch gekennzeichnet, dass** der Rahmen (2, 3) ein Hohlprofil (39, 40) aufweist und zumindest eine der Elektroden (23, 25) von einer Armierung (43) des Hohlprofils (39, 40) gebildet sind.

4. Gebäudeverschlusselement nach Anspruch 3, **dadurch gekennzeichnet, dass** die Armierung (43) einen die erste Fluidöffnung (16) und die zweite Fluidöffnung (17) strömungstechnisch miteinander verbindenden Strömungskanal (45) begrenzt, dessen Längsmittelachse durch eine der Fluidöffnungen (16, 17) verläuft und/oder der im Schnitt gesehen von einer der Fluidöffnungen (16, 17) einen Abstand aufweist, der um einen Faktor von höchstens zwei größer ist als Abmessungen der jeweiligen Fluidöffnung (16, 17).

5. Gebäudeverschlusselement nach Anspruch 4, **dadurch gekennzeichnet, dass** die Armierung (43) zwei beabstandet voneinander angeordnete Armierungsstege (44) aufweist, die an gegenüberliegenden Hohlprofilstegen (41) des Hohlprofils (39, 40) anliegen, wobei der Strömungskanal (45) zwischen den Armierungsstegen (44) verläuft.

6. Gebäudeverschlusselement nach einem der Ansprüche 2 bis 4, **dadurch gekennzeichnet, dass** die erste Elektrode (23) Teil von mehreren ersten Elektroden (23) und die zweite Elektrode (25) Teil von mehreren zweiten Elektroden (25) ist, wobei die ersten Elektroden (23) und die zweiten Elektroden (25) parallel beabstandet zueinander angeordnet sind.

7. Gebäudeverschlusselement nach einem der vorhergehenden Ansprüche, **dadurch gekennzeichnet, dass** in dem Strömungsweg (15) ein Wärmeübertrager (28) zur Temperierung der entlang des Strömungswegs (15) strömenden Luft angeordnet ist.

8. Gebäudeverschlusselement nach Anspruch 7, **dadurch gekennzeichnet, dass** die erste Elektrode (23) und/oder die zweite Elektrode (25) den Wärmeübertrager (28) bilden.

9. Gebäudeverschlusselement nach einem der vorhergehenden Ansprüche, **dadurch gekennzeichnet, dass** in dem Strömungsweg (15) wenigstens ein Schalldämpfer (29,30,31) angeordnet ist.

10. Verfahren zum Betreiben eines Gebäudeverschlusselements (1) nach einem der vorhergehenden Ansprüche, **kennzeichnet,** dass der Ionenwindgenerator (22) zumindest zeitweise zum Erzeugen eines Luftstroms entlang des Strömungswegs (15) betrieben wird.

11. Verfahren nach Anspruch 10, **dadurch gekennzeichnet, dass** mittels eines Temperatursensors eine Temperatur gemessen wird und das Betreiben des Ionenwindgenerators (22) lediglich zugelassen wird, falls die Temperatur größer ist als eine Taupunkttemperatur.

12. Verfahren nach Anspruch 10 oder 11, **dadurch gekennzeichnet, dass** mittels eines Differenzdrucksensors eine Druckdifferenz über den Ionenwindgenerator (22) gemessen und das Betreiben des Ionenwindgenerators (22) lediglich zugelassen wird, falls die Druckdifferenz in einem bestimmten Druckdifferenzbereich liegt.

## Claims

1. Building closure element (1), designed as a roof window, comprising a blind frame (2) and a sash frame (3) supporting glazing (4) of the roof window, and having a first fluid opening (16) and a second fluid opening (17), which are fluidically connected to one another at least intermittently via a flow path (15), wherein the blind frame (2) and/or the sash frame (3) are overlapped on an outer side of the roof surface window at least in regions by a cover plate (9) and the flow path (15) is bounded at least in regions by the cover plate (9), and wherein a ventilation duct (19) is formed in one of the frames (2, 3) and extends through a wall (18) of the frame (2, 3) to form the first fluid opening (16), the second fluid opening (17) is bounded by the cover plate (9) and the ventilation duct (19) is fluidically connected to the second fluid opening (17) via an air space (21) bounded by the cover plate (9), **characterised in that** an ion wind generator (22) is arranged in the flow path (15) for generating an air flow along the flow path (15).

2. Building closure element according to claim 1, **characterised in that** the ion wind generator (22) comprises a first electrode (23) and a second electrode (25) spaced from the first electrode (23), the first electrode (23) having at least one gas discharge tip (26).

3. Building closure element according to one of the preceding claims, **characterized in that** the frame (2, 3) comprises a hollow profile (39, 40) and at least one of the electrodes (23, 25) is formed by a reinforcement (43) of the hollow profile (39, 40).

4. Building closure element according to claim 3, **characterized in that** the reinforcement (43) bounds a flow duct (45) which fluidically connects the first fluid opening (16) and the second fluid opening (17) to one another and whose longitudinal centre axis runs through one of the fluid openings (16, 17) and/or which, as seen in section, is at a distance from one of the fluid openings (16, 17) which is greater by a factor of at most two than the dimensions of the respective fluid opening (16, 17).

5. Building closure element according to claim 4, **characterised in that** the reinforcement (43) comprises two spaced-apart reinforcement webs (44) which bear against opposing hollow profile webs (41) of the hollow profile (39, 40), the flow duct (45) extending between the reinforcement webs (44).

6. A building closure element according to any one of claims 2 to 4, **characterised in that** the first electrode (23) is part of a plurality of first electrodes (23) and the second electrode (25) is part of a plurality of second electrodes (25), the first electrodes (23) and the second electrodes (25) being spaced apart in parallel.

7. Building closure element according to one of the preceding claims, **characterised in that** a heat exchanger (28) is arranged in the flow path (15) for tempering the air flowing along the flow path (15).

8. Building closure element according to claim 7, **characterised in that** the first electrode (23) and/or the second electrode (25) form the heat exchanger (28).

9. Building closure element according to one of the preceding claims, **characterised in that** at least one silencer (29, 30, 31) is arranged in the flow path (15).

10. Method of operating a building closure element (1) according to any one of the preceding claims, **characterised in that** the ion wind generator (22) is operated at least intermittently to generate a flow of air along the flow path (15).

11. Method according to claim 10, **characterised in that** a temperature is measured by means of a temperature sensor and operation of the ion wind generator (22) is only permitted if the temperature is greater than a dew point temperature.

12. Method according to claim 10 or 11, **characterised in that** a pressure difference across the ion wind generator (22) is measured by means of a differential pressure sensor and operation of the ion wind generator (22) is only permitted if the pressure difference lies in a specific pressure difference range.

## Revendications

1. Elément de fermeture de bâtiment (1), conçu comme une fenêtre de toit, qui présente un cadre dormant (2) et un cadre ouvrant (3) portant un vitrage (4) de la fenêtre de toit, et avec une première ouverture de fluide (16) et une deuxième ouverture de fluide (17), qui sont reliés fluidiquement entre eux au moins temporairement par l'intermédiaire d'une voie d'écoulement (15), le cadre dormant (2) et/ou le cadre ouvrant (3) étant recouverts au moins par zones par une tôle de recouvrement (9) sur un côté extérieur de la fenêtre de toit et la voie d'écoulement (15) étant limitée au moins par zones par la tôle de recouvrement (9), et un canal d'aération (19) étant formé dans l'un des cadres (2, 3), lequel traverse une paroi (18) du cadre (2, 3) en formant la première ouverture de fluide (16), la deuxième ouverture de fluide (17) est délimitée par la tôle de recouvrement (9) et le canal d'aération (19) est relié fluidiquement à la deuxième ouverture de fluide (17) par l'intermédiaire d'un espace d'air (21) délimité par la tôle de recouvrement (9), **caractérisé en ce qu'**un générateur de vent ionique (22) est disposé dans la voie d'écoulement (15) pour générer un courant d'air le long de la voie d'écoulement (15).

2. Elément de fermeture de bâtiment selon la revendication 1, **caractérisé en ce que** le générateur de vent ionique (22) comprend une première électrode (23) et une deuxième électrode (25) disposée à distance de la première électrode (23), la première électrode (23) disposant d'au moins une pointe de décharge de gaz (26).

3. Elément de fermeture de bâtiment selon l'une des revendications précédentes, **caractérisé en ce que** le cadre (2, 3) comporte un profilé creux (39, 40) et au moins l'une des électrodes (23, 25) est formée par une armature (43) du profilé creux (39, 40).

4. Elément de fermeture de bâtiment selon la revendication 3, **caractérisé en ce que** l'armature (43) délimite un canal d'écoulement (45) reliant fluidiquement entre eux la première ouverture de fluide (16) et la deuxième ouverture de fluide (17), dont l'axe médian longitudinal passe par l'une des ouvertures de fluide (16, 17) et/ou qui, vu en coupe, est situé à une distance de l'une des ouvertures de fluide (16, 17) qui est supérieure d'un facteur de deux au maximum aux dimensions de l'ouverture de fluide respectif (16, 17).

5. Elément de fermeture de bâtiment selon la revendication 4, **caractérisé en ce que** l'armature (43) présente deux nervures d'armature (44) disposées à distance l'une de l'autre, qui s'appliquent contre des nervures de profilé creux opposées (41) du profilé creux (39, 40), le canal d'écoulement (45) s'étendant entre les nervures d'armature (44).

6. Elément de fermeture de bâtiment selon l'une des revendications 2 à 4, **caractérisé en ce que** la première électrode (23) fait partie d'une pluralité de premières électrodes (23) et la deuxième électrode (25) fait partie d'une pluralité de deuxièmes électrodes (25), les premières électrodes (23) et les deuxièmes électrodes (25) étant disposées parallèlement et à distance les unes des autres.

7. Elément de fermeture de bâtiment selon l'une des revendications précédentes, **caractérisé en ce qu'**un échangeur de chaleur (28) est disposé dans la voie d'écoulement (15) pour tempérer l'air qui s'écoule le long de la voie d'écoulement (15).

8. Elément de fermeture de bâtiment selon la revendication 7, **caractérisé en ce que** la première électrode (23) et/ou la deuxième électrode (25) forment l'échangeur de chaleur (28).

9. Elément de fermeture de bâtiment selon l'une des revendications précédentes, **caractérisé en ce qu'**au moins un amortisseur de bruit (29, 30, 31) est disposé dans la voie d'écoulement (15).

10. Procédé de fonctionnement d'un élément de fermeture de bâtiment (1) selon l'une des revendications précédentes, **caractérisé en ce que** le générateur de vent ionique (22) est actionné au moins temporairement pour générer un courant d'air le long de la voie d'écoulement (15).

11. Procédé selon la revendication 10, **caractérisé en ce qu'**une température est mesurée au moyen d'un capteur de température et **en ce que** le fonctionnement du générateur de vent ionique (22) est autorisé uniquement si la température est supérieure à une température de point de rosée.

12. Procédé selon la revendication 10 ou 11, **caractérisé en ce qu'**une différence de pression à travers le générateur de vent ionique (22) est mesurée au moyen d'un capteur de pression différentielle et **en ce que** le fonctionnement du générateur de vent ionique (22) est autorisé uniquement si la différence de pression se situe dans une plage de différence de pression déterminée.
